# EUROPÄISCHE PATENTSCHRIFT

(11) **EP 2 676 935 B1**
(45) Veröffentlichungstag und Bekanntmachung des Hinweises auf die Patenterteilung: **02.10.2019**
(21) Anmeldenummer: 13002956.4
(22) Anmeldetag: 07.06.2013
(51) Int. Cl.: C02F 3/30, A01K 63/04, C02F 103/20

(54) **VERFAHREN UND ANLAGE ZUR REINIGUNG VON WASSER IN EINER GESCHLOSSENEN AQUAKULTURANLAGE**
METHOD AND PLANT FOR PURIFICATION OF WATER IN A CLOSED AQUACULTURE SYSTEM
PROCÉDÉ ET INSTALLATION DE NETTOYAGE DE L'EAU DANS UNE INSTALLATION D'AQUACULTURE FERMÉE

(30) Priorität: 22.06.2012 DE 102012012259
(43) Veröffentlichungstag der Anmeldung: 25.12.2013
(73) Patentinhaber: ERWIN SANDER ELEKTROAPPARATEBAU GMBH, 31311 Uetze-Eltze (DE)
(72) Erfinder: Wecker, Bert, 24103 Kiel (DE); Sander, Martin, 31311 Uetze-Eltze (DE)
(74) Vertreter: Rehmann, Thorsten

(56) Entgegenhaltungen:
- EP-A1- 1 489 050
- WO-A1-97/49279
- WO-A1-2004/100654
- WO-A1-2005/075366
- WO-A1-2008/131403
- DE-A1- 10 155 190
- DE-U1-202010 016 313
- NL-C1- 1 011 280

## Beschreibung

Die Erfindung betrifft ein Verfahren und eine Anlage zur Reinigung von Wasser aus einem Becken, insbesondere Fischbecken, innerhalb einer geschlossenen Aquakulturanlage, in dem das aus dem Becken abgezogene Wasser durch einen ersten mechanischen Filter vorgereinigt wird und das vorgereinigte Wasser anschließend einem aeroben Biofilter zugeführt wird, der Füllkörper aufweist, auf denen sich Mikroorganismen ansiedeln können, die einen Biofilm bilden.

Ein solches Verfahren ist beispielsweise aus der WO 2008/131403 A1 oder der WO 2005/0075366 A1 bekannt.

Beim Austritt des Wassers aus dem Becken und vor dem Eintritt in die weiterführende Wasseraufbereitung wird das verunreinigte Wasser mittels des mechanischen Filters von Fäkalien der Fische und anderen partikulären Substanzen gereinigt. Im weiterführenden Prozess wird dieses mechanisch vorgereinigte Wasser dann dem sich selbst reinigenden aeroben Biofilter (beispielsweise ein Bewegtbettfilter oder Fließbettfilter) zugeführt. In diesem aeroben Biofilter siedelt sich auf den Füllkörpern eine vielfältige Mikrobiologie an, die im Wesentlichen die Mineralisation (heterotrophe Biologie) und Nitrifikation (lithotrophe Biologie) bewirkt.

Aus der DE 10 2005 017 858 ist ein Verfahren zur Behandlung und Aufbereitung von Kreislaufwasser aus Aquakulturanlagen bekannt, das sowohl für Süßwasser als auch für Salzwasser anwendbar ist. Unter Aquakultur wird die Bewirtschaftung, Vermehrung und Aufzucht von aquatischen Organismen (Fische, Weichtiere, Krebstiere und Pflanzen) in natürlichen und künstlichen Teichen sowie in Netzkäfigen oder Becken bzw. Aquarien verstanden. Bei der Haltung der Lebewesen in der Aquakultur entstehen durch Futterreste bzw. die Ausscheidungen der Organismen Verschmutzungen, von denen das Wasser gereinigt werden muss, damit die in der Aquakulturanlage angesiedelten Organismen sich nicht selbst vergiften.

Aus der DE 10 2006 019 741 A1 ist eine Wasserrezirkulationsanlage bekannt, bei der im System eine Wasserverteilerbehältereinheit integriert ist, in der eine Sauerstoffanreicherung und Entgasung des Prozesswassers sowie die Wasserverteilung zu den Fischbecken und Bioreaktoren unabhängig voneinander einfach ausführbar ist.

In der DE 693 27 337 T2 ist beschrieben, dass geschlossene Anlagen in der industriellen Aquakultur zweckmäßig sind, um die verschiedenen Parameter für eine erfolgreiche Aufzucht der Organismen zu steuern. Zur Entfernung schädlicher Abfallprodukte und Schadstoffe, wie z. B. Fäkalien und stickstoffhaltige Abfälle, die von Wirbeltieren ausgeschieden werden, wird der Einsatz biologischer Filter vorschlagen, um Abfälle und andere unerwünschte Verunreinigungsstoffe zu entfernen oder in ungiftige Produkte umzuwandeln. Typisch für die biologische Filtration sind biologische Drehfilter, Rieselfilter, Wirbelschichten oder Perlfilter verwendet. Das Problem bei biologischer Filtration ist die Tendenz, dass eine solche Anlage als Folge vielfältiger komplexer chemischer und biologischer Prozesse "umkippt" bzw. zusammenbricht oder sich selbst zerstört. Es wird darauf hingewiesen, dass herkömmliche biologische Filter zum Einsatz in geschlossenen Aquakulturanlagen große Flächen benötigen, damit nitrifizierende Bakterien und andere Bakterien wachsen können. Biologische Filter sind im Allgemeinen unspezifisch. Das heißt, biologische Filter sind nicht nur von nitrifizierenden und anderen erwünschten Bakterien bewohnt, sondern viele krankheitserregende Bakterien zusammen mit unerwünschten oder nutzlosen Bakterien, Pilzen, Schimmeln und Viren können den biologischen Filter infizieren und bewohnen. Sobald bei den Bakterien die aerobe Bakterienpopulation zunimmt, bildet sich eine biologische Schleimschicht, die Wasser oder einem anderen Wassermedium, das den Filter durchläuft, Verunreinigungsstoffe zufügt. Normalerweise in dieser gesamten Schleimschicht vorhandene aerobe Bakterien zerfallen und setzen ihre eigenen respiratorischen internen Stoffe in das Anlagenwasser frei. In der Tendenz nimmt die Schleimschichttiefe zu, so dass eine anaerobe Schicht erzeugt wird, in der sich aerobe Bakterien vermehren und zahlreiche Schadstoffe erzeugen können. Solche Bakterien können pathogene Bakterien sein, die in der Lage sein können, auf die gleichen Stoffe, wie die Nutzbakterien im biologischen Filter zu wirken, was die Wirksamkeit der Nutzbakterien maskiert.

Die DE 10 2007 026 538 A1 offenbart ein Verfahren und eine Anlage zur Reinigung von Wasser in einer geschlossenen Aquakulturanlage, das/die einen ersten und einen zweiten mechanischen Filter und einen Biofilter aufweist.

Aus der WO 96/04784 A1 ist ein Verfahren und eine Anlage zur Reinigung von Wasser in einer geschlossenen Aquakulturanlage mit einem ersten mechanischen Filter, einem biologischen Nitrifikations- und einem Denitrifiktaionsreaktor bekannt. Ein Teilstrom aus der Nitrifikation wird der Denitrifikation zugeführt und das Wasser aus der Denitrifikation einem Schlammseparator zugeführt.

Die DE 35 03 723 A1 offenbart eine Vorrichtung zur Reinigung von Wasser in einer geschlossenen Aquakulturanlage, die einen biologischen Nitrifikations- und einen Denitrifikationsreaktor aufweist. Teilströme des Wassers werden über einen Mischbehälter rezirkuliert.

Aus der DE 10 2005 017 858 A1 ist ein Verfahren und eine Anlage zur Reinigung von Wasser in einer geschlossenen Aquakulturanlage bekannt, bei dem/der ein Teilstrom des Wassers einer Denitrifikation unterworfen wird.

Aus der DE 10 2004 056 612 A1 ist eine Vorrichtung zum Reinigen von aus einer Aquakulturanlage stammendem Wasser bekannt, bei dem ein Vakuumentgaser, ein biologischer Sauerstoffzierungsreaktor und ein Denitrifikationsreaktor in Reihe hintereinander geschaltet sind, sodass zunächst durch Unterdruck der Sauerstoffgehalt des Wassers abgesenkt wird, das Nitrat in dem Wasser durch Nitratatmung von Bakterien bei abgesenktem Sauerstoffgehalt reduziert wird und der Sauerstoffgehalt des Wassers vor dem Reduzieren von Nitrat durch Nitratatmung dadurch abgesenkt wird, indem Sauerstoff in dem Wasser mit durch Unterdruck abgesenktem Sauerstoffgehalt durch Atmung von Bakterien verbraucht wird.

Die NL1 011 280 offenbart ein Verfahren und eine Anlage zur Reinigung von Wasser in einer geschlossenen Aquakulturanlage, bei der das Wasser durch einen ersten mechanischen Trommelfilter gereinigt wird, zwei aerobische Reaktoren durchfließt, in einem zweiten mechanischen Filter gereinigt wird und in einem Denitrifikationsreaktor mit Füllkörpern behandelt wird.

Es sind Denitrifikationsreaktoren mit Füllkörpern unterschiedlicher Art und Prägung bekannt, die als Festbettreaktor, Fließbettreaktor oder Bewegtbettreaktor betrieben werden. Bei dieser Art von Reaktoren ist die gleichmäßige Agitation des Trägermaterials betrieblich entscheidend wichtig, gleichzeitig aber auch problematisch, technisch aufwändig, störanfällig und kostenintensiv. Dies wird insbesondere problematisch, wenn es sich um Meerwassersysteme handelt, weil das aggressive Salzwasser die Korrosion fördert.

Bei Denitrifikationsreaktoren auf Belebtschlammbasis wird der Schlamm genutzt, der im Auslauf eines Fischbeckens vor dem Einlauf in die weiterführende Wasseraufbereitung entweder durch Sedimentation oder durch mechanische Filtration dem Wasserstrom entzogen wird. Nachteilig an diesen Anlagen ist, dass es hier zu erheblichen Auswaschungs-Effekten kommt. Das heißt, dass in erheblichem Umfang Schadstoffe aus den Fäkalien der Fische in das Wasser hinein diffundieren. Dies kann insbesondere in geschlossenen Aquakultur-Kreislaufanlagen zu erheblichen Problemen führen, da diese Schadstoffe (z. B. Phosphor, Kupfer) im System kumulieren.

Von dieser Problemstellung ausgehend soll das in der WO 2008/131403 A1 oder der WO 2005/0075366 A1 beschriebene Verfahren zur Reinigung von Wasser, das aus einer geschlossenen Aquakulturanlage stammt, verbessert werden.

Zur Problemlösung zeichnet sich ein erfindungsgemäßes Vefahren durch die Schritte von Anspruch 1 aus.

Wenn das mechanisch vorgereinigte Wasser dann dem sich selbst reinigenden aeroben Biofilter zugeführt wird, und sich in diesem auf den Füllkörpern eine vielfältige Mikrobiologie ansiedelt, wird eine erhebliche Biomasse an Bakterien gebildet, die aus dem selbstreinigenden Biofilter (durch Belüften) kontinuierlich ausgetragen wird. Die hier nicht zu vernachlässigende kontinuierlich ausgetragene Partikelfracht besteht im Wesentlichen aus extrazellulärem Material aus dem Biofilm sowie abgestorbenen und lebenden Mikroorganismen und führt des Weiteren Stoffwechselprodukte der Mikroorganismen mit sich. Um das aus dem Biofilter abgezogene Wasser von der Partikelfracht (Biofilm) zu befreien, wird es einem zweiten mechanischen Filter zugeführt. Der Biofilm wird hier herausgefiltert und mit einem Teil des Wassers dann dem Denitrifikationsreaktor zugeführt. Krankheitserreger und Parasiten sowie deren Stadien werden dann aufgrund der plötzlichen Änderung des Redoxmilieus im Denitrifikationsreaktor zuverlässig abgetötet werden (Entkeimung).

Erfindungsgemäß wird das im Denitrifikationsreaktor denitrifizierte Wasser bevor es dem Becken wieder zugeführt wird, in dem zweiten mechanischen Filter gereinigt. Die hierbei ausgefilterte denitrifizierende Mikrobiologie kann dann insbesondere vorzugsweise wieder in den Denitrifikationsreaktor zurückgeführt werden.

Der sich im Denitrifikationsreaktor bildende mikrobielle Überschuss wird abgesaugt und wird dem ersten mechanischen Filter zugeführt, in dem er dann nochmals einer Reinigung unterzogen wird. Dabei wird der mikrobielle Überschuss also kontrolliert über den ersten mechanischen Filter dem System entzogen, um eine kontrollierte Konzentration an denitrifizierenden Bakterien einzustellen. Der in dem ersten mechanischen Filter bei der Reinigung des Wassers anfallende Schlamm wird aus dem Kreislauf herausgeführt und kann weiter behandelt werden.

Dem Denitrifikationsreaktor werden vorzugsweise zusätzlich zur Denitrifikation befähigte Mikroorganismen zugeführt. Hierdurch wird die Startphase des Denitrifikationsreaktors erheblich verkürzt sowie der Alltagsbetrieb deutlich stabilisiert. Darüber hinaus profitiert der Denitrifikationsreaktor von mitgeführter Substanz als Nährstoff- wie auch als Kohlenstoffquelle. Die Mikroorganismen stammen vornehmlich aus dem aeroben Biofilter. Es hat sich gezeigt, dass eine separate Zuführung an dem Mikroorganismus nicht zwingend nötig ist und trotzdem eine "Initialzündung" erfolgt.

Erfindungsgemäß weist der Denitrifikationsreaktor keine Füllkörper auf. Dadurch kann die sich im Denitrifikationsreaktor aufbauende und zurückgehaltene denitrifizierende Mikrobiologie, die suspendiert vorliegt, mit geringem Aufwand intern bewegt werden, weil es keine Widerstände im Inneren des Reaktors gibt. Sowohl die Investitionskosten als auch die Betriebskosten können gegenüber Füllkörpersystemen deutlich verringert werden.

Vorzugsweise sind die mechanischen Filter Trommelfilter.

Eine Anlage zur Durchführung des Verfahrens besteht aus einem Becken, insbesondere Fischbecken, mindestens zwei mechanischen Filtern, einem aeroben Biofilter, der Füllkörper aufweist, und einem anaeroben Denitrifikationsreaktor, der keine Füllkörper aufweist. Bezogen auf die Fließrichtung des zu reinigenden Wassers ist der Biofilter vorzugsweise zwischen einem ersten und einem zweiten mechanischen Filter angeordnet, wobei ein Eingang des ersten mechanischen Filters und ein erster Ausgang des zweiten mechanischen Filters mit dem Becken, ein zweiter Ausgang des zweiten mechanischen Filters mit einem Eingang des Denitrifikationsreaktors, ein erster Ausgang des Denitrifikationsreaktors mit dem Eingang des zweiten mechanischen Filters und ein zweiter Ausgang des Denitrifikationsreaktors mit dem Eingang des ersten mechanischen Filters in Verbindung steht. Der erste mechanische Filter weist eine Leitung zur Abführung von Schlamm in einen zweiten Kreislauf auf.

Mit Hilfe einer Zeichnung soll ein Ausführungsbeispiel der Erfindung nachfolgend näher erläutert werden.

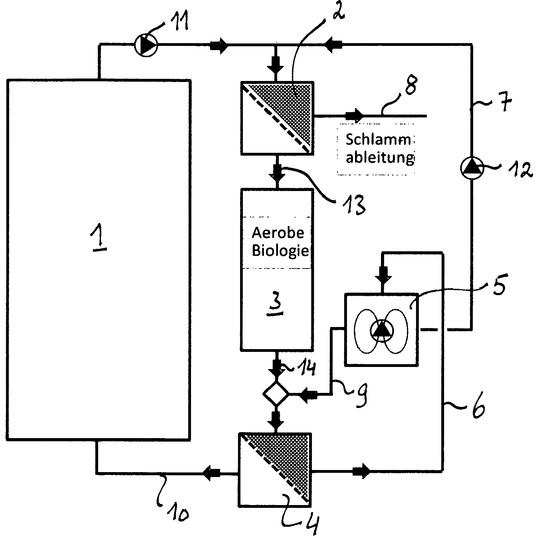

Die einzige Figur zeigt die schematische Darstellung eines ersten Kreislaufs einer geschlossenen Aquakulturanlage, in der das aus dem Fischbecken 1 stammende Wasser, das mit Fäkalien der Fische und anderen partikulären Substanzen verunreinigt ist, gereinigt wird.

Hierzu wird über eine Pumpe 11 das verunreinigte Wasser aus dem Fischbecken 1 abgesaugt und einem Trommelfilter 2 zugeführt, in dem das Wasser zunächst von Fäkalien der Fische und anderen partikulären Substanzen gereinigt wird. Über eine Leitung 13 wird dann das im Filter 2 gereinigte Wasser einem sich selbstreinigenden aeroben Biofilter 3 zugeführt, der als Bewegtbett oder Fließbett ausgebildet sein kann. In diesem aeroben Biofilter 3 siedeln sich auf den darin vorgesehenen Füllkörpern vielfältige Mikroorganismen an, die die Mineralisation (heterotrophe Biologie) und die Nitrifikation (lithotrophe Biologie) des Wassers bewirken.

Im Zuge dieser Aktivitäten wird eine erhebliche Biomasse an Bakterien gebildet, die über die Leitung 14 zusammen mit Wasser aus dem Biofilter 3 kontinuierlich ausgetragen und einem zweiten mechanischen Filter 4 zugeführt wird. Diese Biomasse besteht im Wesentlichen aus extrazellulärem Material sowie abgestorbenen und lebenden Mikroorganismen und führt Stoffwechselprodukte der Mikroorganismen mit sich. Im Trommelfilter 4 wird diese Partikelfracht aus dem Wasser herausgefiltert und bildet dann einen Biofilm, der zusammen mit einem Teil des Wassers über die Leitung 6 dem anaeroben Denitrifikationsreaktor 5 zugeführt wird. Der andere Teil des Wassers wird über die Leitung 10 in das Fischbecken 1 zurückgeführt. Im Denitrifikationsreaktor 5 ändert sich plötzlich das Redoxmilieu, wodurch die Krankheitserreger und Parasiten sowie deren Stadien in dem mikrobiologischen Biofilm abgetötet werden. Um die Startphase des Denitrifikationsreaktors 5 zu verkürzen, werden ihm zur Denitrifikation befähigte Mikroorganismen zugeführt. Das im Denitrifikationsreaktor 5 denitrifizierte Wasser wird über die Leitung 9 nochmals in den hinter dem Biofilter 3 angeordneten zweiten mechanischen Filter 4 eingeleitet. Von hier aus wird es nochmals gefiltert und gelangt dann zum Teil über die Leitung 10 in das Fischbecken 1 und über die Leitung 6 auch wieder in den Denitrifikationsreaktor 5 zurück, wodurch die denitrifizierende Mikrobiologie dann wieder in den Denitrifikationsreaktor 5 zurückgelangt.

Der Denitrifikationsreaktor 5 ist in seinem Inneren ohne Füllkörper ausgerüstet, so dass die sich hierin aufbauende und zurückgehaltene denitrifizierende Mikrobiologie mit geringem Aufwand intern bewegt werden kann, da sie suspendiert vorliegt und es keine Widerstände durch etwaige Füllkörper gibt. Der im Denitrifikationsreaktor 5 anfallende mikrobielle Überschuss wird zusammen mit Wasser über eine Pumpe 12 aus diesem abgesaugt und über die Leitung 7 dem ersten mechanischen Filter 2 wieder zugeführt, so dass dieser nochmals gereinigt wird. Der im mechanischen Filter 2 anfallende Schlamm wird dann über die Leitung 8 abgeführt und kann in einem zweiten, hier nicht näher beschriebenen Kreislauf weiterbehandelt werden. Der erste Teil Wasser, der über die Leitung 9 dem zweiten mechanischen Filter 4 zugeleitet wird, ist in seiner Zusammensetzung identisch zu dem zweiten Teil Wasser, der aus dem Denitrifikationsreaktor 5 über die Leitung 7 dem ersten mechanischen Filter 2 zugeführt wird. Das beschriebene System ist bevorzugt für Salzwasser-Aquakulturanlagen vorgesehen, kann aber ebenso auch für Süßwasseranlagen Verwendung finden.

### Bezugszeichenliste

- 1: Becken / Fischbecken
- 2: mechanischer Filter / Trommelfilter
- 3: Biofilter
- 4: mechanischer Filter / Trommelfilter
- 5: Denitrifikationsreaktor
- 6: Leitung
- 7: Leitung
- 8: Leitung
- 9: Leitung
- 10: Leitung
- 11: Pumpe
- 12: Pumpe
- 13: Leitung
- 14: Leitung

## Patentansprüche

1. Verfahren zur Reinigung von Wasser aus einem Becken (1), insbesondere Fischbecken, innerhalb einer geschlossenen Aquakulturanlage in dem:
a) das aus dem Becken (1) abgezogene Wasser durch einen ersten mechanischen Filter (2) vorgereinigt wird,
b) das vorgereinigte Wasser einem aeroben Biofilter (3) zugeführt wird, der Füllkörper aufweist, auf denen sich Mikroorganismen ansiedeln können, die einen Biofilm bilden,
c) aus dem Biofilter (3) Wasser abgezogen und einem zweiten mechanischen Filter (4) zugeführt wird, in dem der Biofilm herausgefiltert wird,
d) der vom Biofilm gereinigte Teil des Wassers aus dem zweiten mechanischen Filter (4) in das Becken (1) zurückgeführt wird,
e) der Biofilm aus Schritt d) mit einem Teil des Wassers einem keine Füllkörper aufweisenden Denitrifikationsreaktor (5) zugeführt wird, um das Wasser zu denitrifizieren und durch das sich ändernde Redoxpotential im Biofilm befindliche Krankheitserreger und Parasiten abzutöten,
f) zumindest ein erster Teil denitrifiziertes Wasser aus dem Denitrifikationsreaktor (5) in das Becken (1) zurückgefördert wird,
g) der im ersten mechanischen Filter (2) bei der Reinigung des Wassers anfallende Schlamm aus dem Kreislauf herausgeführt wird,
h) bevor der erste Teil denitrifiziertes Wasser dem Becken (1) zugeführt wird, er aus dem Denitrifikationsreaktor (5) direkt in den zweiten mechanischen Filter (4) geleitet und dort gereinigt wird, und
i) ein zweiter Teil denitrifiziertes Wasser aus dem Denitrifikationsreaktor (5) dem ersten mechanischen Filter (2) zugeführt wird.

2. Verfahren nach einem der vorstehenden Ansprüche, **dadurch gekennzeichnet, dass** dem Denitrifikationsreaktor (5) zusätzlich zur Denitrifikation befähigte Mikroorganismen zugeführt werden.

3. Verfahren nach Anspruch 1, **dadurch gekennzeichnet, dass** die mechanischen Filter (2, 4) Trommelfilter sind.

4. Anlage zur Durchführung des Verfahrens nach einem der vorstehenden Ansprüche, bestehend aus einem Becken (1), insbesondere Fischbecken, mindestens zwei mechanischen Filtern (2, 4), einem aeroben Biofilter (3), der Füllkörper aufweist, und einem anaeroben Denitrifikationsreaktor (5), der keine Füllkörper aufweist, bei der bezogen auf die Fließrichtung des zu reinigenden Wassers der Biofilter (3) zwischen einem ersten (2) und einem zweiten (4) mechanischen Filter angeordnet ist, der erste mechanische Filter (2) eine Leitung (8) zur Abführung von Schlamm in einen zweiten Kreislauf aufweist und ein Eingang des ersten mechanischen Filters (2) und ein erster Ausgang des zweiten mechanischen Filters (4) mit dem Becken (1), ein zweiter Ausgang des zweiten mechanischen Filters (4) mit einem Eingang des Denitrifikationsreaktors (5), ein erster Ausgang des Denitrifikationsreaktors (5) mit dem Eingang des zweiten mechanischen Filters (4) und ein zweiter Ausgang des Denitrifikationsreaktors (5) mit dem Eingang des ersten mechanischen Filters (2) in Verbindung steht.

## Claims

1. Method for cleaning water from a tank (1), in particular fish tank, within a closed aquaculture facility, in which:
a) the water removed from the tank (1) is pre-cleaned by a first mechanical filter (2),
b) the pre-cleaned water is fed to an aerobic biofilter (3), which has packings which microorganisms can colonize, the latter forming a biofilm,
c) water is removed from the biofilter (3) and is fed to a second mechanical filter (4), in which the biofilm is filtered out,
d) that portion of the water cleaned of the biofilm is fed from the second mechanical filter (4) back into the tank (1),
e) the biofilm from step d) is fed with a portion of the water to a denitrification reactor (5), which has no packings, in order for the water to be denitrified and, by way of the changing redox potential, for pathogens and parasites present in the biofilm to be killed,
f) at least a first portion of denitrified water is fed from the denitrification reactor (5) back into the tank (1),
g) the sludge accumulating in the first mechanical filter (2) during the cleaning of the water is discharged from the circuit,
h) the first portion of denitrified water, before being fed to the tank (1), is conducted from the denitrification reactor (5) directly into the second mechanical filter (4) and cleaned there, and
i) a second portion of denitrified water is fed from the denitrification reactor (5) to the first mechanical filter (2).

2. Method according to one of the preceding claims, **characterized in that** microorganisms capable of denitrification are additionally fed to the denitrification reactor (5).

3. Method according to Claim 1, **characterized in that** the mechanical filters (2, 4) are drum filters.

4. Installation for carrying out the method according to one of the preceding claims, consisting of a tank (1), in particular fish tank, at least two mechanical filters (2, 4), an aerobic biofilter (3), which has packings, and an anaerobic denitrification reactor (5), which has no packings, in which installation, with respect to the flow direction of the water to be cleaned, the biofilter (3) is arranged between a first (2) and a second (4) mechanical filter, the first mechanical filter (2) has a line (8) for discharging sludge into a second circuit, and an inlet of the first mechanical filter (2) and a first outlet of the second mechanical filter (4) are connected to the tank (1), a second outlet of the second mechanical filter (4) is connected to an inlet of the denitrification reactor (5), a first outlet of the denitrification reactor (5) is connected to the inlet of the second mechanical filter (4) and a second outlet of the denitrification reactor (5) is connected to the inlet of the first mechanical filter (2).

## Revendications

1. Procédé pour la purification de l'eau provenant d'un bassin (1), en particulier d'un bassin de pisciculture, l'intérieur d'une installation d'aquaculture fermée, dans lequel
a) l'eau soutirée du bassin (1) subit une purification préalable au moyen d'un premier filtre mécanique (2),
b) l'eau préalablement purifiée et admise dans un bio-filtre aérobique (3), qui comprend des corps de garnissage sur lesquels des micro-organismes peuvent se fixer, qui forment un biofilm,
c) l'eau est soutirée hors du bio-filtre (3) et est amenée à un second filtre mécanique (4) dans lequel le biofilm est supprimé par filtration,
d) la partie de l'eau purifiée du biofilm provenant du second filtre mécanique (4) est retournée dans le bassin (1),
e) le biofilm provenant de l'étape d) est admis avec une partie de l'eau à un réacteur de dénitrification (5) ne comportant aucun corps de garnissage afin de dénitrifier l'eau et de tuer les germes pathogènes et les parasites qui se trouvent dans le biofilm en raison de la modification du potentiel redox,
f) au moins une première partie de l'eau dénitrifiée provenant du réacteur de dénitrification (5) est retournée jusque dans le bassin (1),
g) les boues qui apparaissent dans le premier filtre mécanique (2) lors de la purification de l'eau sont extraites hors du circuit,
h) avant d'amener la première partie de l'eau dénitrifiée vers le bassin (1) elle est amenée depuis le réacteur de dénitrification (5) directement dans le second filtre mécanique (4) et elle y est purifiée, et
i) une seconde partie de l'eau dénitrifiée provenant du réacteur de dénitrification (5) est amenée au premier filtre mécanique (2).

2. Procédé selon la revendication précédente, **caractérisé en ce que** des micro-organismes capables de favoriser la dénitrification sont amenés en supplément au réacteur de dénitrification (5).

3. Procédé selon la revendication 1, **caractérisé en ce que** les filtres mécaniques (2, 4) sont des filtres à tambour.

4. Installation pour la mise en oeuvre du procédé selon l'une des revendications précédentes, composée d'un bassin (1), en particulier d'un bassin de pisciculture, d'au moins deux filtres mécaniques (2, 4), d'un bio-filtre aérobique (3) qui contient des corps de garnissage, et d'un réacteur de dénitrification anaérobique (5) qui ne contient aucun corps de garnissage, dans laquelle le bio-filtre (3) est agencé, par référence à la direction d'écoulement de l'eau à purifier, entre un premier filtre mécanique (2) et un second filtre mécanique (4), le premier filtre mécanique (2) comprend une conduite (8) pour l'évacuation des boues vers un second circuit et une entrée du premier filtre mécanique (2) et une première sortie du second filtre mécanique (4) communiquent avec le bassin (1), une seconde sortie du second filtre mécanique (4) communique avec une entrée du réacteur de dénitrification (5), une première sortie du réacteur de dénitrification (5) communique avec l'entrée du second filtre mécanique (4), et une seconde sortie du réacteur de dénitrification (5) communique avec l'entrée du premier filtre mécanique (2).
